# EUROPÄISCHE PATENTSCHRIFT

(11) **EP 1 726 466 B1**
(45) Veröffentlichungstag und Bekanntmachung des Hinweises auf die Patenterteilung: **23.07.2008**
(21) Anmeldenummer: 06010561.6
(22) Anmeldetag: 23.05.2006
(51) Int. Cl.: B60H 3/00

(54) **Klimaanlage, insbesondere für ein Kraftfahrzeug**
Air conditioner, in particular for a vehicle
Climatisation, en particulier pour un véhicule

(30) Priorität: 24.05.2005 DE 102005024446
(43) Veröffentlichungstag der Anmeldung: 29.11.2006
(73) Patentinhaber: Behr GmbH & Co. KG, 70469 Stuttgart (DE)
(72) Erfinder: Englert, Peter, Dipl.-Ing. (FH), 74177 Bad Friedrichshall (DE); Klingler, Dietrich, Dipl.-Ing., 73540 Heubach (DE)

(56) Entgegenhaltungen:
- DE-A1- 10 258 025
- FR-A- 2 858 269
- US-A- 5 983 659
- US-A1- 2004 003 602

## Beschreibung

Die Erfindung betrifft eine Klimaanlage, insbesondere für ein Kraftfahrzeug, gemäß dem Oberbegriff des Anspruchs 1.

Bei Kraftfahrzeug-Klimaanlagen tritt das Problem auf, dass am Verdampfer der Klimaanlage, welcher eine möglichst große Oberfläche aufweist, um den Kühleffekt zu optimieren, die in der Luft enthaltene Feuchtigkeit kondensiert und sich Kondenswasser ansammelt. An den feuchten Oberflächen setzt sich auch Staub aus der Luft ab, so dass sich innerhalb kurzer Zeit Bakterien und Pilze ansiedeln. Diese führen zu einem unangenehmen Geruch, welcher unerwünscht ist.

Aus der DE 44 45 881 C2 ist ein Mittel zur Verhinderung von mikrobakteriellem Anwuchs an einer Oberfläche durch Aufbringung oder Bereitstellen einer den Anwuchs hemmenden oder verhindemden Substanz auf bzw an der Oberfläche bekannt, wobei als hemmende Substanz oder Wirkstoff ein Gesteinsmehl mit einem auf diesem abgeschiedenen oder gebundenen Katalysator verwendet wird. Als Katalysator wird bspw. Braunstein (Manganoxid), Palladium oder Ruthenium verwendet.

Aus der EP 0 409 130 B1 ist ein Aluminium-Wärmetauscher bekannt, bei welchem zur Vermeidung von Bakterien Schutzfilme auf den Oberflächen vorgesehen sind.

Derartige Wärmetauscher sind jedoch relativ aufwendig in der Herstellung. Zudem sind die Beschichtungen nicht ungefährlich und verteuern gegebenenfalls eine Entsorgung des Wärmetauschers.

Alternativ sind physikalische Verfahren zur Entkeimung bekannt, wie beispielsweise die Bestrahlung mit UV-Licht, jedoch sind diese ebenfalls kostenintensiv.

Aus der US 5,983,659 ist eine Klimatisierungseinrichtung für ein Fahrzeug bekannt, bei welcher zwischen einem Verdampfer und einem Heizkörper eine Entlüftungsleitung angeordnet ist, bekannt.

Es ist Aufgabe der Erfindung, eine verbesserte Klimaanlage zur Verfügung zu stellen.

Diese Aufgabe wird gelöst durch eine Klimaanlage mit den Merkmalen des Anspruchs 1. Vorteilhafte Ausgestaltungen sind Gegenstand der Unteransprüche.

Erfindungsgemäß ist eine Klimaanlage vorgesehen, insbesondere eine Kraftfahrzeug-Klimaanlage, mit mindestens einem in einem Gehäuse angeordneten Heizer, ggf. auch einem Zuheizer, und einem Verdampfer, wobei Klappen zur Regelung des Luftstroms und eine Entlüftungsöffnung vorgesehen sind. Durch das Vorsehen einer Entlüftungsöffnung kann abgestandene, geruchsbehaftete Luft aus dem Gehäuse der Klimaanlage nach außen befördert werden, so dass sie beim Starten der Klimaanlage über das Kraftfahrzeug-Belüftungssystem nicht in den Fahrzeuginnenraum gelangt, wodurch der Komfort gesteigert werden kann. Diese Lösung des Problems hat gegenüber den herkömmlichen chemischen Lösungen, die Beschichtungen o. ä. vorsehen, den Vorteil, dass sie in Hinblick auf die Umwelt unbedenklich ist. Natürlich ist jedoch auch eine Kombination mit anderen Lösungen, bspw. mit hydrophoben oder ggf. hydrophilen Oberflächen, welche derart ausgebildet sind, dass sie das Kondenswasser rasch ableiten, möglich.

Die Entlüftungsöffnung ist vorzugsweise durch eine Klappe regelbar, wobei die Regelung der Klappe vorzugsweise in Verbindung mit der Regelung des Gebläsemotors (Start desselben) und mit der Regelung der Klappen zur Regelung des Luftstroms durch den Bypass, also vorbei am Heizer, und zur Regelung des Luftstroms durch den Heizer verbunden ist.

Die Entlüftungsöffnung ist vorzugsweise zwischen Verdampfer und Heizer vorgesehen, so dass ein relativ kleiner Bereich des Gehäuses, in welchem der Verdampfer angeordnet ist, betroffen ist und entsprechend wenig Luft abgeführt werden muss. Folglich ist die Luft schnell ausgetauscht und vom Entlüftungsbetrieb beim Anfahren der Klimaanlage kann schnell auf den Normalbetrieb umgestellt werden. Alternativ kann die Entlüftungsöffnung strömungsseitig auch vor dem Verdampfer beziehungsweise über oder unter dem Verdampfer angeordnet sein.

Bevorzugt ist zwischen dem Verdampfer und dem Heizer eine Klappe, beispielsweise eine Jalousie-Klappe, Rollbandkassette oder eine Flügelklappe angeordnet, welche den Luftstrom durch den Heizer regelt.

Die Entlüftungsöffnung ist über einen Luftkanal mit der Umgebung verbunden. Dieser Luftkanal wird durch einen Teil des Frischluftkanals gebildet, welcher in entgegengesetzter Richtung zum Frischluftbetrieb der. Klimaanlage durchströmt wird. Dies ermöglicht eine optimale Ausnutzung des Bauraums Hierfür ist jedoch eine entsprechende Regelung der Frischluft/Umluftklappe erforderlich, so dass dieselbe beim Starten der Klimaanlage automatisch auf Frischluftbetrieb gestellt wird.

Im Folgenden wird die Erfindung anhand eines Ausführungsbeispiels unter Bezugnahme auf die Zeichnung im Einzelnen erläutert. In der Zeichnung zeigen:

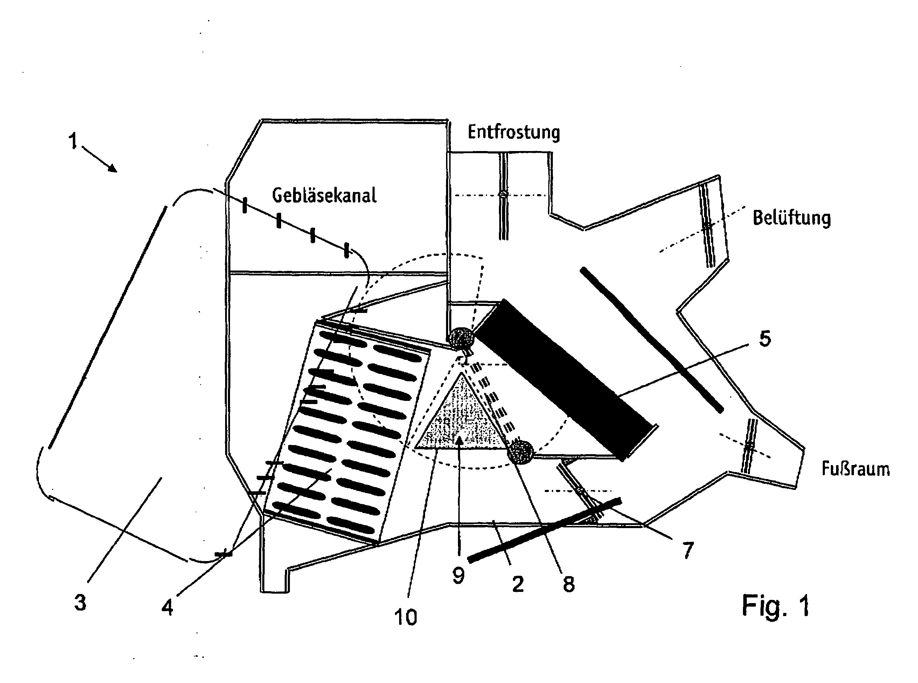

- Fig. 1: eine schematische Schnittdarstellung einer erfindungsgemäßen Kraftfahrzeug-Klimaanlage gemäß dem Ausführungsbeispiel, und

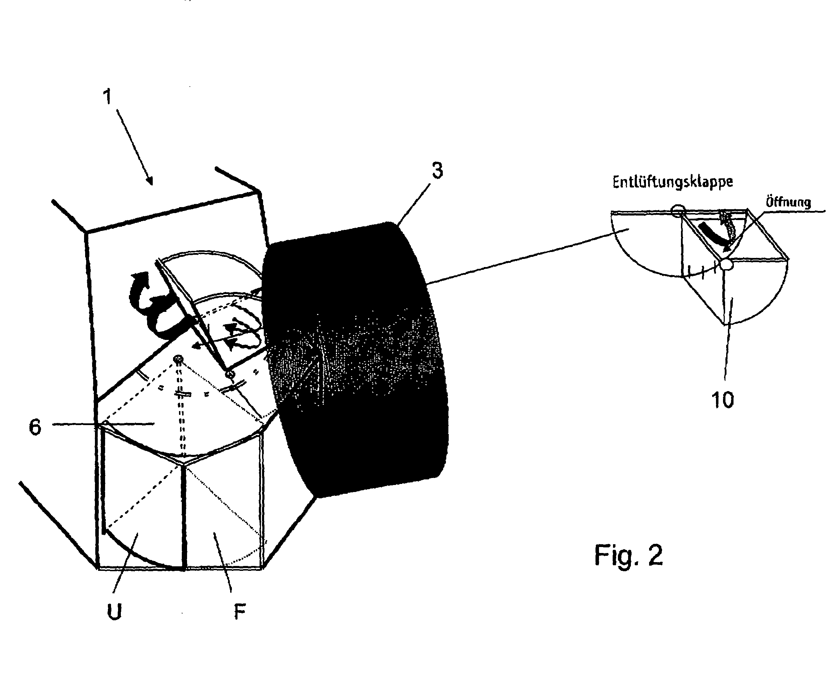

- Fig. 2: eine perspektivische Darstellung des Klappenbereichs der Klimaanlage von Fig. 1 mit Detaildarstellung der Entlüftungsklappe.

Eine vorliegend einzonige Kraftfahrzeug-Klimaanlage 1 weist in einem Gehäuse 2 angeordnet nach einem Frischluft- und Umluftkanal F bzw. U ein Gebläse 3, einen Verdampfer 4 und einen Heizer 5 auf. Die mit Hilfe des Verdampfers 4 und ggf. des Heizers 5 temperierte Luft wird nach einem Mischraum auf an sich bekannte Weise über Luftkanäle (Entfrostung, Belüftung und Fußraum) dem Fahrzeuginnenraum zugeführt.

Die Regelung der Luftführung, d.h. die Temperierung der dem Fahrzeuginnenraum zuzuführenden Luft, erfolgt bei Normalbetrieb auf an sich bekannte Weise mittels Klappen, wobei eine erste Klappe 6 zur Regelung der Zufuhr von Frischluft und Umluft vorgesehen ist. Femer ist eine zweite Klappe 7 vorgesehen, welche den Luftstrom vorbei am Heizer 5 regelt. Vor dem Heizer 5 ist eine dritte Klappe 8, vorliegend in Form einer Jalousie-Klappe mit Rollbandkassette, vorgesehen, welche die Luftführung durch den Heizer 5 regelt.

Um die abgestandene, geruchsbehaftete Luft im Verdampfer 4 beim Anfahren der Klimaanlage 1 zu beseitigen, ist im Gehäuse 2 eine seitliche Entlüftungsöffnung 9 im Bereich zwischen Verdampfer 4 und Heizer 5 vorgesehen, welche mittels einer Entlüftungsklappe 10, vorliegend einer Art Trommelklappe mit seitlicher Öffnung, im normalen Betrieb verschließbar ist, die jedoch zur Beseitigung der abgestandenen, geruchsbehafteten Luft nach einem Stillstand der Klimaanlage 1 kurzfristig geöffnet wird. Hierbei wird sowohl die zweite Klappe 7 als auch die dritte Klappe 8 geschlossen, so dass die gesamte Luft durch die Entlüftungsöffnung 9 nach außen gelangt. Nach einer vorgegebenen Zeit wird die Entlüftungsöffnung 9 automatisch geschlossen und die Klappen 7 und 8 nehmen die der gewünschten Temperatur entsprechende Stellung ein.

Gemäß einer Variante ist eine mehrzonige Klimaanlage vorgesehen, wobei jeweils durch das Vorsehen von Trennwänden und unterteilten, getrennt regelbaren Klappen die einzelnen Zonen voneinander getrennt sind. Um jedoch bei einem Start der Klimaanlage eine vollständige Entlüftung derselben zu ermöglichen, sind die Entlüftungsklappen, von denen je eine je Zone vorgesehen ist, miteinander gekoppelt. Die Regelung der anderen Klappen, nämlich der zweiten Klappen, welche den Luftstrom vorbei am Heizer regeln, und der dritten Klappen, welche die Luftführung durch den Heizer regeln, erfolgt entsprechend dem ersten Ausführungsbeispiel.

## Patentansprüche

1. Klimaanlage, insbesondere für Kraftfahrzeug-Klimaanlage, mit mindestens einem in einem Gehäuse (2) angeordneten Heizer (5), und einem Verdampfer (4), wobei Klappen (6, 7, 8) zur Regelung des Luftstroms vorgesehen sind und im Gehäuse (2) eine Entlüftungsöffnung (9) zur Beförderung von abgestandene, geruchsbehaftete Luft aus dem Gehaüse, vorgesehen ist **dadurch gekennzeichnet, dass** die Entlüftungsöffnung (9) über einen Luftkanal, der durch einen Teil eines Frischluftkanals (F) gebildet ist, mit der Umgebung verbunden ist.

2. Klimaanlage nach Anspruch 1, **dadurch gekennzeichnet, dass** die Entlüftungsöffnung (9) durch eine Entlüftungsklappe (10) regelbar ist.

3. Klimaanlage nach Anspruch 1 oder 2, **dadurch gekennzeichnet, dass** die Entlüftungsöffnung (9) zwischen Verdampfer (4) und Heizer (5) vorgesehen ist.

4. Klimaanlage nach einem der vorhergehenden Ansprüche, **dadurch gekennzeichnet, dass** zwischen dem Verdampfer (4) und dem Heizer (5) eine Klappe (8) angeordnet ist.

5. Klimaanlage nach Anspruch 4, **dadurch gekennzeichnet, dass** die Klappe (8) eine Jalousie-Klappe ist.

6. Klimaanlage nach einem der vorhergehenden Ansprüche, **dadurch gekennzeichnet, dass** die Regelung der Öffnung der Entlüftungsöffnung (9) mit der Regelung der Klappen (7, 8) zur Regelung des Luftstroms durch den Bypass vorbei am Heizer (5) und zur Regelung des Luftstroms durch den Heizer (5) derart verbunden sind, dass bei geöffneter Entlüftungsöffnung (9) die beiden anderen Klappen (7, 8) vollständig geschlossen sind.

7. Verfahren zur Regelung einer Klimaanlage (1) nach einem der vorhergehenden Ansprüche, wobei die Entlüftungsöffnung (9) durch eine Entlüftungsklappe (10) geregelt wird, die bei Betriebsaufnahme der Klimaanlage (1) geöffnet wird und die Luft aus dem Gehäuse (2) der Klimaanlage (1) über die Entlüftungsöffnung (9) über zumindest einen Teil des Frischluftkanals (F) nach außen geleitet wird.

8. Verfahren nach Anspruch 7, **dadurch gekennzeichnet, dass** der gesamte den Verdampfer (4) durchströmende Luftstrom durch die Entlüftungsöffnung (9) bei geöffneter Entlüftungsklappe (10) geleitet wird.

9. Verfahren nach Anspruch 7 oder 8, **dadurch gekennzeichnet, dass** die Entlüftungsklappe (10) zur Regelung der Öffnung der Entlüftungsöffnung (9) geöffnet und die Klappen (7, 8) zur Regelung des Luftstroms durch den Bypass vorbei am Heizer (5) und zur Regelung des Luftstroms durch den Heizer (5) geschlossen werden, sobald die Klimaanlage (1) gestartet wird, bevor das Gebläse (3) anläuft.

10. Verfahren nach einem der Ansprüche 8 bis 9, **dadurch gekennzeichnet, dass** bei offener Entlüftungsöffnung (9) vom Gebläse (3) ausschließlich Luft aus dem Fahrzeuginnenraum angesaugt wird.

## Claims

1. An air conditioner, in particular for a motor vehicle air conditioner, having at least one heater (5) positioned in a housing (2) and an evaporator (4), dampers (6, 7, 8) being provided for regulating the air flow and a ventilation opening (9) for carrying stale, bad-smelling air out of the housing being provided in the housing (2),
**characterised in that**
the ventilation opening (9) is connected to the surrounding environment via an air duct formed by part of a fresh air duct (F).

2. An air conditioner in accordance with claim 1,
**characterised in that**
the ventilation opening (9) can be regulated by means of a ventilation damper (10).

3. An air conditioner in accordance with claim 1 or 2,
**characterised in that**
the ventilation opening (9) is provided between the evaporator (4) and the heater (5).

4. An air conditioner in accordance with one of the preceding claims,
**characterised in that**
positioned between the evaporator (4) and the heater (5) is a damper (8).

5. An air conditioner in accordance with claim 4,
**characterised in that**
the damper (8) is a louver damper.

6. A air conditioner in accordance with one of the preceding claims,
**characterised in that**
the system for regulating the aperture of the ventilation opening (9) is connected to the system for regulating the dampers (7, 8) for regulating the air flow through the bypass past the heater (5) and for regulating the air flow through the heater (5) in such a manner that when the ventilation opening (9) is open the other two dampers (7, 8) are completely shut.

7. A process for regulating an air conditioner (1) in accordance with one of the preceding claims, the ventilation opening (9) being regulated by a ventilation damper (10) which is opened when the air conditioner (1) commences operation, and the air is conducted out of the housing (2) of the air conditioner (1) via the ventilation opening (9) through at least a part of the fresh air duct (F) to the outside.

8. A process in accordance with claim 7,
**characterised in that**
the entire air flow passing through the evaporator is conducted through the ventilation opening (9) when the ventilation damper (10) is open.

9. A process in accordance with claim 7 or 8,
**characterised in that**
the ventilation damper (10) for regulating the aperture of the ventilation opening (9) is opened and the dampers (7, 8) for regulating the air flow through the bypass past the heater (5) and for regulating the air flow through the heater (5) are closed as soon as the air conditioner (1) is started, before the fan (3) starts up.

10. A process in accordance with one of claims 8 to 9,
**characterised in that**
when the ventilation opening (9) is open, the fan (3) takes in air from the passenger compartment only.

## Revendications

1. Système de climatisation, en particulier pour un véhicule automobile, comprenant au moins un dispositif de chauffage (5) disposé dans un carter (2), et un évaporateur (4), où il est prévu des volets (6, 7, 8) servant à la régulation du flux d'air et où il est prévu, dans le carter (2), un orifice de ventilation (9) pour le transport d'air vicié et malodorant provenant du carter, **caractérisé en ce que** l'orifice de ventilation (9) est raccordé à l'environnement ambiant, par un conduit d'air qui est formé par une partie d'un conduit d'air frais (F).

2. Système de climatisation selon la revendication 1, **caractérisé en ce que** l'orifice de ventilation (9) est réglable par un volet de ventilation (10).

3. Système de climatisation selon la revendication 1 ou 2, **caractérisé en ce que** l'orifice de ventilation (9) est prévu entre l'évaporateur (4) et le dispositif de chauffage (5).

4. Système de climatisation selon l'une quelconque des revendications précédentes, **caractérisé en ce qu'**un volet (8) est disposé entre l'évaporateur (4) et le dispositif de chauffage (5).

5. Système de climatisation selon la revendication 4, **caractérisé en ce que** le volet (8) est un volet persienne.

6. Système de climatisation selon l'une quelconque des revendications précédentes, **caractérisé en ce que** le réglage de l'ouverture de l'orifice de ventilation (9) est relié au réglage des volets (7, 8) servant à la régulation du flux d'air traversant la dérivation en passant devant le dispositif de chauffage (5) et servant à la régulation du flux d'air traversant le dispositif de chauffage (5), de manière telle, que lorsque l'orifice de ventilation (9) est ouvert, les deux autres volets (7, 8) soient complètement fermés.

7. Procédé de régulation d'un système de climatisation (1) selon l'une quelconque des revendications précédentes, l'orifice de ventilation (9) étant réglé par un volet de ventilation (10) qui est ouvert au début du fonctionnement du système de climatisation (1), et l'air provenant du carter (2) du système de climatisation (1) est dirigé vers l'extérieur par l'orifice de ventilation (9), en passant par au moins une partie du conduit d'air frais (F).

8. Procédé selon la revendication 7, **caractérisé en ce que** la totalité du flux d'air traversant l'évaporateur (4) est dirigée à travers l'orifice de ventilation (9) lorsque le volet de ventilation (10) est ouvert.

9. Procédé selon la revendication 7 ou 8, **caractérisé en ce que** le volet de ventilation (10) servant au réglage de l'ouverture de l'orifice de ventilation (9) est ouvert, et les volets (7, 8) servant à la régulation du flux d'air traversant la dérivation en passant devant le dispositif de chauffage (5), et servant à la régulation du flux d'air traversant le dispositif de chauffage (5), sont fermés, dès que le système de climatisation (1) est lancé, avant que le ventilateur (3) commence à fonctionner.

10. Procédé selon la revendication 8 ou 9, **caractérisé en ce que**, lorsque l'orifice de ventilation (9) est ouvert, exclusivement de l'air provenant de l'habitacle du véhicule est aspiré par le ventilateur (3).
